(19) Europäisches Patentamt
European Patent Office
Office européen des brevets

(11) Veröffentlichungsnummer: **0 166 794**
**B1**

(12) **EUROPÄISCHE PATENTSCHRIFT**

(45) Veröffentlichungstag der Patentschrift: **04.11.87**

(51) Int. Cl.⁴: **F 16 B 12/50**

(21) Anmeldenummer: **84107633.4**

(22) Anmeldetag: **02.07.84**

(54) **Verbinder zum Kuppeln von Profilstangen eines Gestells.**

(43) Veröffentlichungstag der Anmeldung:
**08.01.86 Patentblatt 86/2**

(45) Bekanntmachung des Hinweises auf die Patenterteilung:
**04.11.87 Patentblatt 87/45**

(84) Benannte Vertragsstaaten:
**AT CH DE FR GB IT LI NL**

(56) Entgegenhaltungen:
**DE-A-3 128 595**
**DE-U-1 813 685**
**DE-U-1 835 555**

(73) Patentinhaber: **Gebrüder Vieler GmbH, Gennaer Strasse 66, D-5860 Iserlohn- Letmathe (DE)**

(72) Erfinder: **Hackenberg, Dieter, Kohlensiepen 130 d, D-5810 Witten 6 (DE)**

(74) Vertreter: **Mentzel, Norbert, Dipl.- Phys., Patentanwälte Dipl.- Phys. Buse Dipl.- Phys. Mentzel Dipl.- Ing. Ludewig Unterdörnen 114, D-5600 Wuppertal 2 (DE)**

**EP 0 166 794 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung richtet sich auf einen Verbinder der im Gattungsbegriff des Anspruches 1 genannten Art. Bei deisem Verbinder ist es bekannt (DE-A-31 28 595) durch weniger als eine volle Drehung des Exzenterbolzens die mit einem am Stirnende der Profilstange herausragenden Kupplungshaken ausgerüstete Platte aus ihrer unwirksamen Ausschublage in eine kupplungswirksame Einschublage zu überführen. In Ausschublage befindet sich der Kupplungshaken in Ausrichtung mit ortsfesten Kupplungsnasen, die an der Stirnseite eines im Hohlprofil der einen Profilstange steckenden Lagergehäuses sitzen, welches zugleich die den beweglichen Kupplungshaken tragende Platte längsverschieblich führt und zur Drehlagerung eines Exzenterbolzens dient. Das Lagergehäuse ist dabei mit einer Keilfläche und die profilierte Platte mit einer daran anliegenden Gegenschräge ausgerüstet, weshalb bei der Bewegung der Platte in Längsrichtung die Plattengegenschräge auf die Keilfläche aufläuft und den Kupplungshaken quer zur Profilstange bewegt. Ist der Kupplungshaken zusammen mit den ortsfesten Kupplungsnasen vorher in die Längsnut einer Profilstange eingesteckt worden, so hintergreift der Kupplungshaken bei seiner Querbewegung die hinterschnittene Längsnut zuverlässig und zieht die erfaßte Nutwand im Zuge der weiteren Längsverschiebung an das Stirnende der den Verbinder aufnehmenden Profilstange heran.

Diese bekannten Verbinder lassen zwar eine schnelle Kupplung zu, weil zum Festspannen bzw. Freigeben der zu kuppelnden Profilstangen der Exzenterbolzen nur die Drehung über einen Teilkreis auszuführen braucht, doch ergeben sich Beschädigungen des Verbinders, wenn der Exzenterbolzen zwecks besonders hoher Kupplungsfestigkeit stark angezogen wird. Der am Exzenterbolzen vorgesehene Exzenter muß ausreichend groß bemessen sein, um eine Längsverschiebung hohen Ausmaßes herbeiführen zu können. Insbesondere in jenen Fällen, wo der Exzenterbolzen durch eine quer zur Profilstange auf die Platte wirkende Federkraft belastet ist und mit seinem Handhabungsende in einer Querbohrung der Profilstange elastisch nachgiebig eingreift und dadurch eine leichte Montage und Demontage des Verbinders in der Profilstange ermöglicht, ist der Exzenter als eine auf der Außenseite der Platte anliegende Exzenterscheibe ausgebildet. Eine solche groß bemessene Exzenterscheibe hat den Vorteil, zugleich als Drehanschlag für den Exzenterbolzen in seinen beiden Endstellungen zu dienen, welche die Ein- und Ausschublage der mit dem Kupplungshaken ausgerüsteten Platte bestimmen. Zieht man den Exzenterbolzen in diesen Endlagen fest an, um z. B. in Einschublage der Platte eine besonders hohe Kupplungsfestigkeit zu erreichen, so drückt sich die Exzenterscheibe so stark in die Seitenwand des Gehäuses bzw. der Profilstange ein, daß es dort zu bleibenden Deformationen kommt. Die Profilstange kann sich ausbeulen oder platzen. Es kommt bei Ausübung hoher Kräfte auch zu Verformungen im Bereich von Steuernocken, die an der Platte angeordnet sind und die Exzenterscheibe zwischen sich fassen, um beim Drehen des Exzenterbolzens die Platte zwischen ihrer Ein- und Ausschublage zu verschieben.

Der Erfindung liegt die Aufgabe zugrunde, einen preiswerten Verbinder der im Gattungsbegriff des Anspruches 1 genannten Art zu entwickeln, der eine Kupplung hoher Festigkeit gewährleistet und hohen Belastungen zuverlässig stand hält. Dies wird erfindungsgemäß durch die im Kennzeichen des Anspruches 1 angeführten Maßnahmen erreicht, deren Besonderheit in folgender Wirkung liegt:

Die Platte erhält bei der Erfindung eine neue Funktion, nämlich als Drehanschlag zur Begrenzung der Drehung des Exzenterbolzens zu dienen. Dazu braucht die Platte lediglich mit einer als Anschlag wirkenden Schulter versehen zu werden und der Exzenterbolzen braucht außer dem ohnehin nötigen Exzenter nur noch mit einer festen Anschlagnase ausgerüstet zu sein, die sich beim Drehen des Exzenterbolzens natürlich mitdreht. Die Schulter der Platte und die Anschlagnase liegen in einer gemeinsamen Drehebene und ihre Winkelpositionen sind bezüglich des Exzenters so gelegt, daß in den entscheidenden Endstellungen des Exzenterbolzens, wenn sich also die Platte in ihrer vollen Ein- und/oder Ausschublage befindet, diese Elemente aneinander stoßen und ein Weiterdrehen des Exzenterbolzens blockieren. Die Stoßkraft zwischen der Anschlagnase und Schulter wird von der Platte aufgenommen und über ihre großflächige Schmalseite der gesamten Längsführungsfläche im Hohlprofil bzw. Lagergehäuse übertragen. Die Übertragung dieser Stoßkraft auf das Lagergehäuse bzw. Hohlprofil erfolgt folglich großflächig, wodurch selbst sehr hohe Anzugskräfte zu einer so kleinen Flächenpressung führen, daß Deformationen des Materials mit Sicherheit nicht zu befürchten sind. Man kann also bei der Erfindung gefahrlos den Exzenterbolzen kräftig in seiner Endstellung anziehen, ohne Beschädigungen des Verbinders oder Profils befürchten zu müssen.

Eine sehr einfache Ausbildung der Schulter an der Platte ergibt sich, wenn man, gemäß Anspruch 2, die Umrißlinie eines Langlochs in der Platte, welches zum Durchführen des Exzenterbolzens bei dessen Drehlagerung im Profil dient, als Schulter wirken läßt. Man bildet die Umrißlinie als Anschlagkante aus, während die Anschlagnase am Exzenterbolzen innerhalb des Langlochs angeordnet ist. Das Langloch ist ohnehin erforderlich, um die Längsverschiebung der Platte zwischen ihrer Ein- und Ausschublage zu ermöglichen. Um die Drehung der Anschlagnase zwischen der Ein- und Ausschublage der Platte zu ermöglichen, die über einen Winkelbereich von annähernd 180° geht, wird man das Langloch in der Platte mit einer entsprechenden Aussparung auf dieser Seite versehen. Die andere Seite aber bildet die genannte Anschlagkante für die Endpositionen des Exzenterbolzens. Bei hohen Kupplungskräften kommt es auch leicht zu Deformationen an den bereits oben erwähnten Steuervorsprüngen, welche die Exzenterscheibe des Exzenterbolzens zwischen sich fassen und für die Längsverschiebung der Platte sorgen. Um die Stabilität auch in dieser Hinsicht zu sichern, wird, gemäß Anspruch 4 vorgeschlagen, wenigstens einen der Steuervorsprünge aus einer aus der Plattenebene ausgeformten Sicke zu bilden. Die Sicke ist in der Lage, höhere Kräfte aufzunehmen als abgewinkelte Lappen, die sich bei hohen Belastungen zu leicht zurückbiegen. Sicken können in Kraftverlaufsrichtung zur Erhöhung der Stabilität einen länglichen Verlauf aufweisen und können daher vielfache Kräfte unbeschadet aufnehmen.

Für die Herstellung und den Zusammenbau von Verbindern ist es zwar vorteilhaft, die oben erwähnte, quer zur Profilstange wirkende Federkraft durch eine Federzunge auszubilden, die einstückig aus dem die Platte bildenden Stahlblechstreifen ausgebildet ist, doch können bei hohen Belastungen Deformationen zwischen der abgebogenen Zunge und dem Plattenrest eintreten, wodurch die Federkraft herabgesetzt ist und die Funktionsfähigkeit des Verbinders leidet. Um diese Deformationen auszuschließen, wird gemäß Anspruch 5 vorgeschlagen, einen Stützbock vorzusehen, der wenigstens in voller Einschublage die Platte im Nachbarbereich zur Federzunge abstützt. In dieser Lage ist dann der Biegewinkel zwischen der Federzunge und dem Restteil der Platte fixiert.

In den Zeichnungen ist die Erfindung in einem Ausführungsbeispiel dargestellt. Es zeigen:

Fig. 1 die geschnittene Seitenansicht von zwei Profilstangen, die mit dem erfindungsgemäßen Verbinder gekuppelt werden sollen,

Fig. 2 eine längsgeschnittene Draufsicht auf die Profilstangen von Fig. 1,

Fig. 3 die geschnittene rückseitige Detailansicht von Fig. 2 längs der dortigen Schnittlinie III-III,

Fig. 4 eine der Fig. 1 entsprechende Ansicht, wobei aber der Verbinder die Kupplung der beiden profilstangen bewirkt,

Fig. 5 eine der Fig. 2 entsprechende längsgeschnittene Draufsicht der in Fig. 4 gezeigten Kupplungsstellung,

Fig. 6 eine der Fig. 3 entsprechende rückseitige, geschnittene Detailansicht der in der einen Profilstange befindlichen Bauteile längs der Schnittlinie VI-VI von Fig. 5,

Fig. 7 eine der Fig. 2 entsprechende Längsschnittansicht durch den Verbinder und die Profilstange, wobei sich die Bauteile des Verbinders in einer seine Montage und Demontage in der Profilstange gestattenden Montagestellung befinden,

Fig, 8, 9, 10 und 11 die Vorderansicht, Rückansicht, und zwei zueinander versetzte Seitenansichten eines beim erfindungsgemäßen Verbinder verwendeten Exzenterbolzens in starker Vergrößerung,

Fig. 12 und 13 die Draufsicht und Rückansicht eines als Bestandteil des erfindungsgemäßen Verbinders dienenden Blechstreifens,

Fig. 14 und 15 die Seitenansicht und Draufsicht auf einen weiteren Bestandteil des erfindungsgemäßen Verbinders, nämlich ein Lagergehäuse.

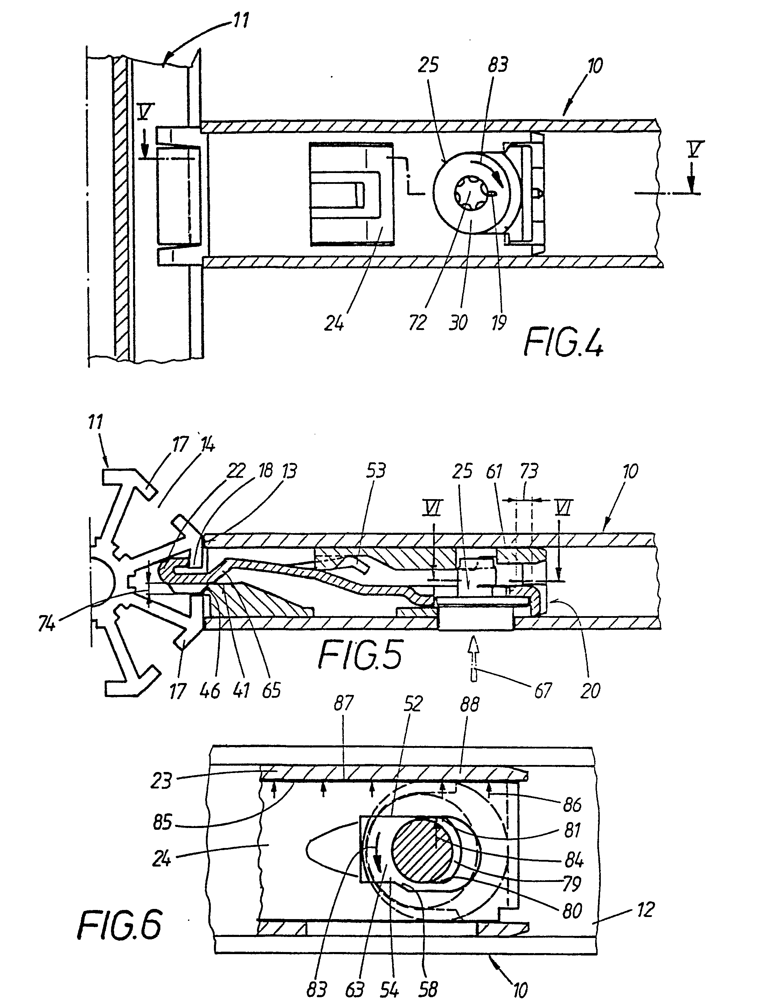

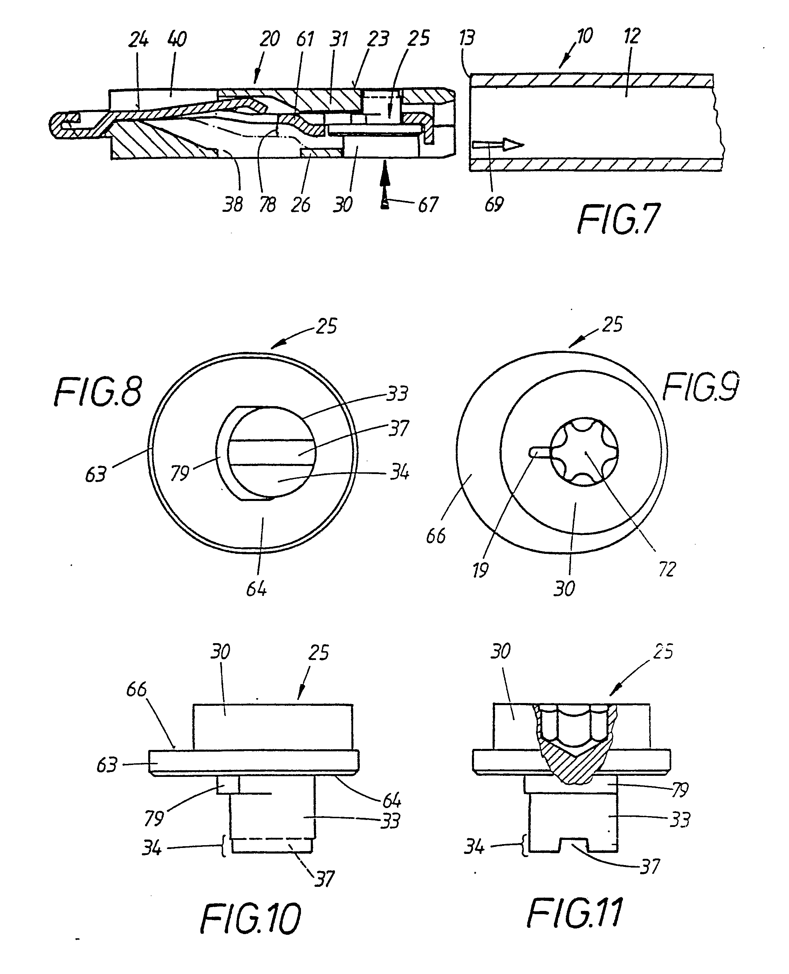

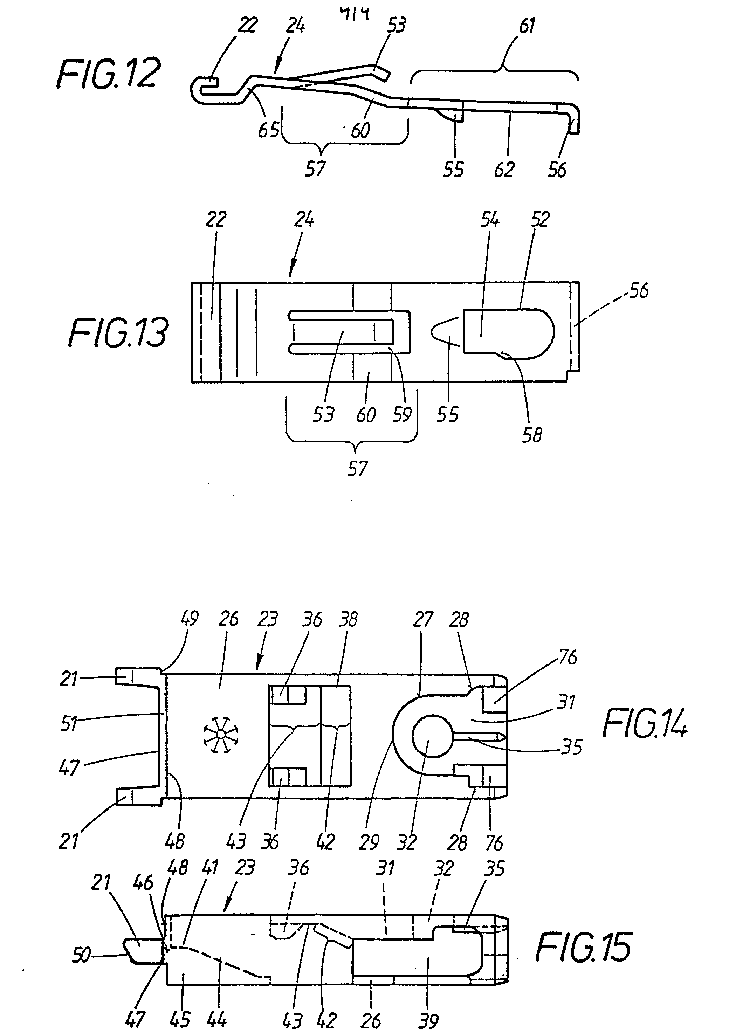

Zur Bildung eines Gestells aus Profilstangen oder Säulen 10, 11 werden Verbinder 20 verwendet, die im Hohlraum 12 der einen Profilstange untergebracht sind. Aus dem Stirnende 13 dieser Stangen 10 ragen zweierlei Kupplungsmittel 21, 22 heraus, die im Kupplungsfall, der in den Fig. 4 bis 6 gezeigt ist, in Eingriff mit hinterschnittenen Längsnuten 14 der anderen Profilstange kommen, die hier aus einer vertikalen achteckigen Säule 11 besteht und auf ihrem Umfang mit acht solchen Längsnuten 14 ausgerüstet ist. Der Verbinder besteht aus einer vorgefertigten Baueinheit, die im vorliegenden Fall nur drei Bestandteile erfordert, nämlich, wie am besten aus Fig. 10 bis 15 hervorgeht, ein Lagergehäuse 23 (vergl. Fig. 14, 15) eine aus einem profilierten Blechstreifen gebildete Platte 24 (vergl. Fig. 12, 13) und einen Exzenterbolzen 25 (vergl. Fig. 8 bis 11). Diese Bestandteile haben im einzelnen folgendes Aussehen:

Das Lagergehäuse 23 hat Rechteckform mit einem dem Hohlprofil der zugehörigen Profilstange 10 angepaßten Querschnitt, der hier rechteckig ausgebildet ist. Daher hat das Lagergehäuse die Form eines Rechteckrohres, das zwar in besonderer Weise profiliert ist, aber vorne und hinten offene Stirnenden aufweist und damit eigentlich nur aus Seitenwänden besteht.

Die in Fig. 14 vorne liegende Seitenwand 26 ist am hinteren Ende des Lagergehäuses 23 mit einem Wandausschnitt 27 versehen, der sich zum Ende über einen Absatz nach/oben und unten erweitert und als Montageöffnung zum Einbau des erwähnten Exzenterbolzens 25 und des Blechstreifens 24 dient. Gemäß Fig. 9 und 10 besitzt der Exzenterbolzen 25 einen Lagerkopf 30, für den das Innenende des Wandausschnitts 27 als kreisförmige Lagerstelle 29 ausgebildet ist. Die hintere Seitenwand 31 des Lagergehäuses 23 ist, koaxial zum Kreisbogen der vorderwandigen Lagerstelle 29, mit einer Lagerbohrung 32 versehen, in welche ein entsprechend dimensionierter Lagerzapfen 33 des Exzenterbolzens im Montagezustand eingreift. Diese hintere Seitenwand 31 ist im Bereich der Lagerbohrung 32 abgesetzt, wie aus Fig. 15 hervorgeht, weshalb nur der Endbereich 34 des Lagerzapfens 33 eingreift und nur halbseitig in der Lagerbohrung 32 anliegt. Auf der gegenüberliegenden Seite der Lagerbohrung 32 sitzt eine längsverlaufende Führungsleiste 35 innen auf der Seitenwand 31, welche bei der Montage des mit dem Blechstreifen 24 ausgerüsteten Exzenterbolzens 25 in eine Montagenut 37 im Endbereich 34 des Lagerzapfens 33 führend eingreift. Dadurch ist die Drehstellung des Exzenterbolzens 25 beim Montagevorgang festgelegt, wenn er im Lagergehäuse 23 montiert wird.

Das Lagergehäuse 23 ist einstückig aus Zinkdruckguß hergestellt und besitzt zwecks guter Zugänglichkeit von Teilen der Gießform ein vorderes Fenster 38, ein oberes Fenster 39 und ein hinteres, am besten aus Fig. 7 ersichtliches Fenster 40. Diese Fenster lassen auch eine Beobachtung des Montagevorgangs des mit dem Exzenterbolzen 25 ausgerüsteten Blechstreifens 24 zu. Die Innenflächen der vorderen und hinteren Seitenwand 26, 31 sind in besonderer Weise profiliert.

Die hintere Seitenwand 31 ist verdickt und besitzt eine Neigungsfläche 42, welche in eine ebene Führungsfläche 43 übergeht. Im Bereich der oberen und unteren Seitenwand sitzen an der Führungsfläche 43 Stützböcke 36, denen besondere Bedeutung zukommt. Jenseits des vorderen Fensters 38 weist die vordere Seitenwand 26 eine beträchtliche Wandverdickung 45 auf, die zunächst eine flach ansteigende Rampe 44, dann eine flache Kuppe 41 und schließlich eine nach vorn abfallende steile Keilfläche 46 aufweist. Die Keilspitze 47 liegt etwas vor dem vorderen Stirnende 48 des Lagergehäuses 23 und kommt in den Bereich von zwei als eine Sorte von Kupplungsmitteln dienenden Kupplungsnasen 21, die fest am Lagergehäuse 23 sitzen und dessen Stirnende 48 überragen.

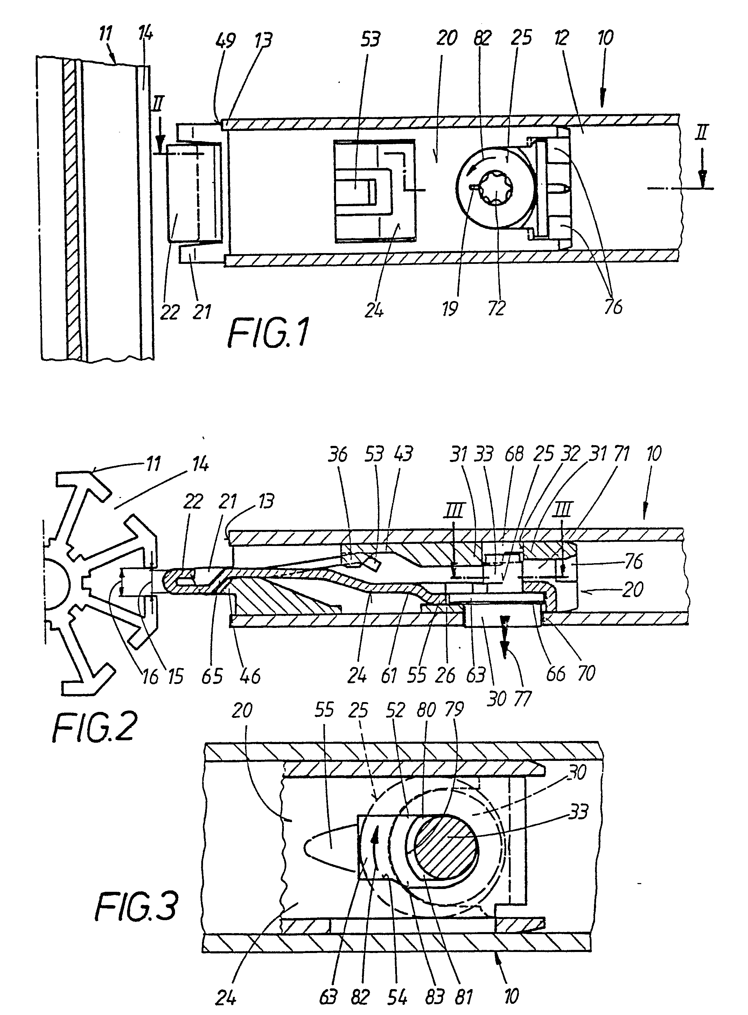

Die Kupplungsnasen 21 sind Fortsetzungen der oberen bzw. unteren Seitenwand des Lagergehäuses 23, haben aber zu den Seitenwänden hin eine Absatzschulter 49, die sich, wie aus Fig. 1 hervorgeht, vor das Stirnende 13 der zugehörigen Profilstange 10 setzt. Durch diese Anschlagwirkung ist die Einstecktiefe des Verbinders 20 im Hohlraum 12 der Profilstange festgelegt. Die aus der Draufsicht in Fig. 15 ersichtliche Zuspitzung 50 der Kupplungsnasen 21 erleichtert die Einführung in die Längsnut 14 der Profilstange 11. Weil die Keilspitze 47 in den Bereich der Kupplungsnasen 21 vorgezogen ist, entsteht vor der Gehäuse-Stirnfläche 48 ein am besten aus Fig. 14 ersichtlicher Keilsteg 51, welcher die beiden Nasen 21 miteinander verbindet.

Der Blechstreifen 24 besteht aus Stahlblech und hat die besondere, aus Fig. 12 und 13 ersichtliche Profilform. An seinem vorderen Ende befindet sich ein zurückgebogener Haken 22, der ein weiteres Kupplungsmittel für den Verbinder 20 darstellt. Im angrenzenden Mittelstück 57 des Streifens 24 ist durch einen U-förmigen Schnitt 59 eine Federzunge 53 ausgeschnitten und vom Rest dieses Mittelstücks 57 abgebogen. Im Mittelstück 57 befindet sich auch noch eine Z-artige Verkröpfung 60 in der Platte 24. Der Endabschnitt 61 der Platte 24 besitzt ein Langloch 54 mit besonderem Profil. Das Plattenende ist umgebogen und bildet eine Steuerleiste 56 auf der einen Flächenseite 62 der Platte 24. Am inneren Rand besitzt das Langloch 54 eine zu der gleichen Flächenseite 62 vorspringende Sicke 55, die ihrerseits einen noch näher zu erläuternden Steuervorsprung dort bildet. Die Sicke 55 ist längsgeformt und erstreckt sich in Verlaufsrichtung des Blechstreifens 24. Das Langloch 54 besitzt eine als Anschlagschulter 52 fungierende Umrißkante an ihrer einen Seite, während die gegenüberliegende Seite des Langlochs aus noch näher zu erläuternden Gründen mit einem Ausschnitt 58 versehen ist.

An der Übergangsstelle zwischen dem Kupplungshaken 22 und dem Mittelstück 57 der Platte 24 ist eine weitere Abkröpfung angebracht, die eine nach innen gerichtete Schräge 65 erzeugt, welcher eine besondere Bedeutung zukommt.

Zur Montage wird zunächst der Exzenterbolzen 25 mit seinem Lagerzapfen 33 durch das Langloch 54 der Platte 24 gesteckt, bis seine Exzenterscheibe 63 mit ihrer am besten aus Fig. 10 ersichtlichen Innenfläche 64 an der vorerwähnten Flächenseite 62 der Platte 24 zur Anlage kommt. Dabei gelangen die endseitige Leiste 56 und die Sicke 55 des Platten-Endabschnitts 61 an diametral gegenüberliegende Umfangsstellen dieser Exzenterscheibe 63. Die Platte 24 wird nun zusammen mit dem Exzenterbolzen 25 durch die hintere Öffnung in das Innere des Lagergehäuses 23 eingeschoben, so daß der Exzenterbolzen 25 in den Wandausschnitt 27 gelangt. Die streifenförmige Platte 24 wird dabei über die Neigungsfläche 42 und die Rampe 44 der beiden Seitenwände 31, 26 geleitet. Im Endzustand nehmen die Bauteile die aus Fig. 1 und 2 ersichtliche Lage ein. Der Kupplungshaken 22 befindet sich zwischen den beiden Kupplungsnasen 21 vor dem Lagergehäuse 23. Die vordere Kröpfung schnappt dabei vor die Keilspitze 47, wodurch die Innenschräge 65 sich an die Keilfläche 46 anlegt. Das freie Ende der Federzunge 53 stützt sich an der Fläche 43 zwischen den beiden Stützböcken 36 längsverschieblich ab. Die am Plattenende abgebogene Leiste 56 hintergreift die Exzenterscheibe 63 und hält dadurch den Exzenterbolzen 25 an seiner Lagerstelle 29 und in seiner Lageröffnung 32 fest. Jetzt bilden die drei Bestandteile des Verbinders 20, nämlich Lagergehäuse 23, Platte 24 und Exzenterbolzen 25 eine zusammenhängende Baueinheit, die zur Vereinigung ihrer Bestandteile keiner weiteren Befestigungsmittel bedarf. Die sich an der Führungsfläche 43 abstützende Federzunge 43 übt eine Federkraft quer zur Profilstange 10 auf den Endabschnitt 61 der Platte 24 aus, wodurch der Exzenterbolzen 25 mitgenommen und im Sinne des in Fig. 2 eingezeichneten Pfeils 77 nach außen gedrückt wird, bis die Außenfläche 66 der Exzenterscheibe 63 an der Innenseite der Gehäuse-Seitenwand 26 zur Anlage kommt. Dadurch ragt normalerweise der Lagerkopf 30 des Exzenters seitlich über die Begrenzungen des Lagergehäuses 23 hinaus und kann die weitere Aufgabe erfällen, zur Montage des Verbinders 20 in der zugehörigen Profilstange 10 zu dienen, was, wie Fig. 7 verdeutlicht, folgendermaßen abläuft:

Der Verbinder 20 kommt als vorgefertigte Baueinheit in den Handel. Je nach Bedarf wird der Verbinder 20 von der Stirnfläche 13 aus in den Hohlraum 12 der Profilstange 10 eingeschoben. Zu diesem Zweck wird der herausragende Lagerkopf 30 des Exzenterbolzens 25, wie ein Druckknopf, im Sinne des aus Fig. 7 ersichtlichen Pfeils 67 eingedrückt, so daß er sich innerhalb der Umrisse des Lagergehäuses 23 befindet. Der Exzenterbolzen 25 ist nämlich in seinen Drehlagerstellen 29, 32 axial beweglich aufgenommen und im Ausgangszustand, gemäß Fig. 2, befinden sich sowohl in der Axialbohrung 32 hinter dem Lagerzapfen 33 als auch ein Freiraum 71 zwischen dem Platten-Endabschnitt 61 und der Innenfläche der hinteren Gehäuse-Seitenwand 31 ein leerer Raum 68. Bei dieser Eindruckbewegung 67 im Sinne der Fig. 7 kommt es zu der durch den Winkel 78 angedeuteten Verschwenkung des Platten-Endabschnitts 61. Jetzt kann die Baueinheit 20 im Sinne des Bewegungspfeils 69 eingeschoben werden, bis es zu der bereits oben im Zusammenhang mit Fig. 1 und 2 erläuterten Anschlagwirkung zwischen dem Profil-Stirnende 13 und den Absätzen 49 der Kupplungsnase 21 kommt. Dann befindet sich der Exzenter-Lagerkopf 30 in Ausrichtung mit einer am besten aus Fig. 2 ersichtlichen Querbohrung 70 der Profilstange 10. Läßt der axiale Druck 67 nach, so schnappt der Exzenter-Lagerkopf 30 unter Entspannung der Federzunge 53 in die Querbohrung 70 ein. Dieser Eingriffszustand ist in Fig. 1 und 2 gezeigt. Durch diesen Eingriff des Exzenter-Lagerkopfs 30 in der Querbohrung 70 ist die Position des Verbinders 20 in der Profilstange 10 gesichert. Die Demontage erfolgt im umgekehrten Sinn; dazu muß wiederum der Exzenter-Lagerkopf 30 im Sinne der Fig. 7 eingedrückt 67 werden. Die auf den Platten-Endabschnitt 61 einwirkende Federkraft 77 der Federzunge 53 sorgt also zugleich dafür, daß die Einbaulage des Verbinders 20 in der Profilstange 10 gesichert ist.

Im Falle der Fig. 1 und 2 befindet sich der Kupplungshaken 22 in einer Ausschublage. Der in der Profilstange 10 befindliche Verbinder 20 ist jerzt kupplungsfähig und kann mit seinen Kupplungsmitteln 21, 22 an der gewünschten Stelle in eine Längsnut 14 der Säule 11 eingesteckt werden. In dieser Ausschublage befindet sich der Kupplungshaken 22 in Ausrichtung mit den Kupplungsnasen 21. Die Kupplungsmittel 21, 22 nehmen nur eine schmale Baubreite zueinander ein, die der Eingangsweite 16 der Längsnut 14 entspricht. Die Baubreite 15 entspricht im wesentlichen nur der Baubreite eines einzelnen Kupplungsmittels, nämlich derjenigen des Kupplungshakens 22. Diese Ausschublage ist, wie Fig. 3 zeigt, durch einen besonderen Drehanschlag des Exzenterbolzens 25 gesichert.

An der Innenfläche 64 der Exzenterscheibe 63 ist eine Anschlagnase 79 angeformt, welche in das angrenzende Langloch 54 eingreift. Die Anschlagnase 79 besitzt zwei Anschlagstellen 80, 81. In der Ausschublage gemäß Fig. 1 bis 3 ist eine Weiterdrehung des Exzenterbolzens 25 im Sinne des Drehpfeils 82 blockiert, weil die eine Anschlagstelle 80 der Nase 79 an der bereits oben im Zusammenhang mit Fig. 13 erläuterten, als Anschlagschulter 52 dienenden Umrißkante des Langlochs 54 zur Anlage kommt. Auch die Ausübung großer Drehmomente führt zu keiner Beschädigung des Verbinders, wie noch eingehender im Zusammenhang mit der analogen Fig. 6 erläutert wird, wo durch diese Bauteile die andere Endposition des Exzenterbolzens blockiert wird, welche die Einschublage der Platte 24 gemäß Fig. 4 und 5 bestimmt.

Um die ausgewählte Position der Profilstange 10 an der Säule 11 zu fixieren, wird der Exzenterbolzen 25 entgegen dem in Fig. 1 bzw. 3 gezeigten Drehpfeil 82 verdreht. Dazu kann ein Werkzeug in eine profilierte Aufnahme 72 auf der äußeren Stirnfläche des Exzenter-Lagerkopfs 30 eingeführt werden, die durch die Querbohrung 70 der Profilstange 10 zugänglich ist. Bei dieser Drehung nimmt die Exzenterscheibe 63 über die endseitige Steuerleiste 56 die Platte 24 mit und verschiebt sie innenwärts in die aus Fig. 4 bis 6 ersichtliche Einschublage, welche die Kupplungsstellung des Verbinders 20 zeigt. Wie aus dem Vergleich zwischen Fig. 3 und 6 ersichtlich ist, hat sich jetzt der exzentrische Bereich der Scheibe 63 auf die andere Seite bewegt und liegt jetzt, im Fall der Fig. 6, an der endseitigen Leiste 56 der Platte 24. Es ist also lediglich eine Drehbewegung um 180° nötig. Die Platte 24 hat sich dadurch um die aus Fig. 5 ersichtliche Strecke 73 nach einwärts verschoben. Das Langloch 54 ist auf der bezüglich der Anschlagschulter 52 gegenüberliegenden Lochseite mit dem Ausschnitt 58 versehen, in welchen sich die Anschlagnase 79 beim Drehen des Exzenters frei hindurchbewegen kann. Die Anschlagnase wird erst in der bereits erwähnten Endstellung gemäß Fig. 4 bis 6 wirksam. Jetzt stößt die andere Anschlagstelle 81 der Nase 79 gegen die erwähnte Anschlagschulter 52 der Platte 24, die von der einen Umrißkante des Langlochs 54 gebildet ist. Ein Weiterdrehen des Exzenters im Sinne des Drehpfeils 63 von Fig. 4 und 6 ist jetzt nicht mehr möglich; die Platte 24 wirkt als Sperre und nimmt das von der Nase 79 ausgeübte Drehmoment über ihre Schulter 52 auf. Diese durch den Pfeil 84 in Fig. 6 angedeutete Stoßkraft verteilt sich auf die ganze Platten-Schmalseite 85, die, wie durch Pfeile 86 verdeutlicht ist, zu einer verhältnismäßig kleinen Flächenpressung führt bezüglich der dort liegenden Längsführungsfläche 67 für diese Platte 24. Die Stoßkraft 84 verteilt sich dadurch großflächig und kann zu keiner Deformation der die Längsführungsfläche 87 bildenden oberen Gehäuse-Seitenwand 88 führen. Damit ist eine Verformungsgefahr der Profilstange 10 ebenfalls vermieden.

Bei der aus Fig. 5 ersichtlichen Verschiebung 73 der Platte 24 hat sich auch ihr Kupplungshaken 22 entsprechend einwärts geschoben. Weil aber die Platte mit ihrer vorderseitigen Verkröpfung an der Keilfläche 46 anlag, läuft sie jetzt mit ihrer erwähnten Gegenschräge 65 auf den Keil auf und gelangt in der Drehendstellung des Exzenterbolzens 25 auf die im Zusammenhang mit Fig. 15 erläuterte flache Kuppe 41. Der Kupplungshaken 22 bewegt sich dadurch, gegen die Federkraft der Federzunge 53, quer zum Profil um eine in Fig. 5 angedeutete Querversatz-Strecke 74. Die Nutwand 18 des Säulenprofils 11 wird dadurch hintergriffen und vom Kupplungshaken 22 fest gegen das Stirnende der den Verbinder 20 tragenden Profilstange 10 gepreßt, die sich an der Umfangsfläche 17 des Säulenprofils 11 drückt. Jetzt sind die beiden Profilstangen 10, 11 fest miteinander gekuppelt. Die starren Kupplungsnasen 21 lassen eine Torsionsbewegung der Profilstange nicht zu. Die beiden Drehendstellungen gemäß Fig. 1 und 4 des Exzenterbolzens 25 sind an einer Marke 19 ablesbar, die hier an seinem erwähnten Lagerkopf 30 angebracht ist. In der die Ausschubstellung der Platte 24 kennzeichnenden Drehstellung des Exzenterbolzens 25 von Fig. 1 ist diese Marke 19 zum Ende der Profilstange 10 hin gerichtet, während in der die Einschublage der Platte 24 gemäß Fig. 4 kkennzeichnenden Drehstellung die Marke 19 zur Stangenmitte hin weist.

Der erfindungsgemäße Verbinder 20 besitzt schließlich auch noch eine Sicherung gegen seome unerwünschte Demontage aus seiner Profilstange 10. In der aus Fig. 4 bis 6 ersichtlichen, die Einschublage der Platte 24 kennzeichnenden Drehendstellung des Exzenterbolzens 25 ist dessen oben erwähnte "Druckknopfwirkung" blockiert. Dazu ist, wie am besten Fig. 14 zeigt, das Lagergehäuse 23 an seinem Innenende mit einem Paar von Auflauf-Böcken 76 versehen. Ihre Position ist so gewählt, daß in der Ausschublage der Platte 24 gemäß Fig. 1 bis 3 der Auflauf-Bock 76 sich noch außerhalb der Platte 24 befindet, aber in der Einschublage, gemäß Fig. 4 bis 6 der Endabschnitt 61 der Platte sich randseitig über den Auflauf-Bock 76 schiebt. Der Platten-Endabschnitt 61 ist also rückseitig auf den Böcken 76 abgestützt und der Exzenterbolzen 25 läßt sich nicht mehr nach Art eines Druckknopfs im Sinne des strichpunktiert in Fig. 5 angedeuteten Druckpfeils 67 einwärts drücken. Die federnde Nachgiebigkeit des Plattenendstücks 61 ist beseitigt. Die Montagelage des Verbinders 20 in der Profilstange 10 ist daher gesichert und seine unbeabsichtigte Demontage ausgeschlossen. Der Exzenterbolzen 25 besteht aus einsatzgehärtetem Stahl. Die im Mittelstück 57 der Platte 24 vorgesehene Verkröpfung 60 bringt eine gewisse Längsfederung, die in der gespannten Einschublage des Kupplungshakens 22 zu einer elastischen Streckung der Platte 24 führt.

Zum Lösen der Kupplung wird der Exzenterbolzen 25 wieder im umgekehrten Drehsinn der zuletzt beschriebenen Spannbewegung zurückgedreht, und zwar im Drehsinn 62 von Fig. 1 bzw. 3. Die Exzenterscheibe 63 drückt dann gegen die erwähnte Sicke 55 und schiebt die Platte 24 wieder nach außen um die erwähnte Längsverschiebungsstrecke 73. Die Gegenschräge 65 gleitet dabei unter der Kraft der Federzunge 53 an der Keilfläche 46 abwärts und kommt schließlich in die aus Fig. 1 bis 3 ersichtliche Position. Der Kupplungshaken 22 ist wieder in Ausrichtung mit den festen Kupplungsnasen 21 und läßt sich aus der Nut 14 des Säulenprofils 11 wieder herausziehen. Die Profilstangen 10, 11 sind wieder voneinander gelöst. Bedarfsweise kann jetzt der Verbinder 20 auch aus dem Profil 10 wieder ausgebaut werden durch das Eindrücken 67 des vorspringenden Lagerkopfs 30, wie schon im Zusammenhang mit Fig. 7 erläutert wurde.

**Bezugszeichenliste:**

10 Profilstange, Hohlprofilstange
11 Profilstange, Säulenprofil
12 Hohlraum von 10
13 Stirnende von 10
14 Längsnut von 11
15 Breitenmaß von 21, 22
16 Eingangsweite von 14
17 Umfangsfläche von 11
18 Nutwand
19 Markierung bei 30
20 Verbinder, Baueinheit
21 Kupplungsmittel, Kupplungsnase
22 Kupplungsmittel, Kupplungshaken
23 Lagergehäuse
24 Platte, Blechstreifen
25 Exzenterbolzen
26 vordere Seitenwand
27 Wandausschnitt
28 Absatz
29 Lagerstelle
30 Lagerkopf von 25
31 hintere Seitenwand
32 Lagerbohrung
33 Lagerzapfen von 25
34 Endbereich von 33
35 Führungsleiste bei 31
36 Stützbock bei 31
37 Montagenut in 34
38 vorderes Fenster
39 oberes Fenster
40 hinteres Fenster
41 flache Kuppe von 45
42 Neigungsfläche
43 Führungsfläche für 53
44 flache Rampe von 45

45 Wandverdickung
46 Keilfläche
47 Keilspitze
48 vorderes Stirnende von 23
49 Absatzschulter von 21
50 Zuspitzung von 21
51 Keilsteg
52 Anschlag-Schulter
53 Federzunge
54 Langloch in 24
55 Sicke, Steuervorsprung
56 Leiste, Steuervorsprung
57 Mittelstück
58 Ausschnitt in 54
59 U-Schnitt in 24
60 Verkröpfung von 24
61 Endabschnitt von 24
62 Flächenseite von 24
63 Exzenterscheibe von 25
64 Innenfläche von 63
65 Gegenschräge
66 Außenfläche von 63
67 Eindruckbewegungs-Pfeil
68 Leer-Raum hinter 34
69 Einschiebe-Pfeil für 20
70 Querbohrung in 10
71 Freiraum zwischen 61 und 31
72 Werkzeugaufnahme in 30
73 Schubstrecke von 24
74 Querversatz-Strecke von 22
76 Auflauf-Bock
77 Federkraft-Pfeil
78 Schwenkbewegungswinkel von 61
79 Anschlagnase von 25
80 Anschlagstelle von 79
81 Anschlagstelle von 79
82 Drehpfeil von 25 (Fig. 1 bis 3)
83 Drehpfeil von 25 (Fig. 4 bis 6)
84 Stoßkraft-Pfeil
85 Plattenschmalseite von 24
86 Flächenpressungs-Pfeil
87 Längsführungsfläche für 24 bei 23
88 obere Gehäuse-Seitenwand von 23

**Patentansprüche**

1. Verbinder (20) zum Kuppeln von Profilstangen (10, 11) eines Gestells, von denen wenigstens einige hinterschnittene Längsnuten (14) und andere ein Hohlprofil (12) zur stirnseitigen Aufnahme des Verbinders (20) aufweisen, wobei,
der Verbinder (20) entweder unmittelbar oder mittelbar über ein Lagergehäuse (23) wenigstens eine längsverschieblich (Pfeil 73) im Hohlprofil geführte profilierte Platte (24) mit einem endseitigen Kupplungshaken (22) aufweist,
der Kupplungshaken (22) jeweils aus dem Stirnende (13) der den Verbinder (20) aufnehmenden Profilstange (10) herausragt, im Kupplungsfall in eine Längsnut (14) der anderen Profilstange (11) einsteckbar sowie dort festspannbar ist,
die Platte (24) von einem im Hohlprofil (12) bzw. Lagergehäuse (23) drehgelagerten, quer zur Profilstange (10) verlaufenden Exzenterbolzen (25) durchsetzt ist,
der zum Drehen (Pfeile 82; 83) durch eine Querbohrung (70) in der Profilstange (10) zugänglich ist,
und der Exzenterbolzen (25) beim Drehen (Pfeile 82; 83) mit seinem Exzenter (63) die Platte (24) in Längsrichtung der Profilstange (10) zwischen einer Ausschublage (Fig. 1 bis 3) und einer Einschublage (Fig. 4 bis 6) verschiebt,
dadurch gekennzeichnet,
daß der Exzenterbolzen (25) eine in definierter Winkelposition zum Exzenter (63) liegende, mitdrehbare Anschlagnase (79) besitzt
und die Platte (24) in der Drehebene dieser Anschlagnase (79) eine Schulter (52) aufweist,
auf welche die Anschlagnase (79) beim Drehen (Pfeile 82; 83) des Exzenterbolzens (25) in die volle Ein- und/oder Ausschublage der Platte (24) stößt,
wobei diese Stoßkraft (Pfeil 84) die Schmalseite (85) der Platte (24) gegen ihre Längsführungsfläche (87) im Hohlprofil (12) bzw. Lagergehäuse (23) preßt (Pfeil 86) und die Weiterdrehung (Pfeile 82; 83) des Exzenterbolzens (25) blockiert.

2. Verbinder (20) nach Anspruch 1 mit einem Langloch (54) in der Platte (24) zum Durchführen des Exzenterbolzens (25), dadurch gekennzeichnet,
daß die Anschlagnase (79) im Langloch (54) angeordnet ist und die eine Umrißlinie (52) des Langlochs (54) die Schulter zur Drehbegrenzung (Pfeile 82; 83) des Exzenterbolzens (25) bildet.

3. Verbinder (20) nach Anspruch 2, dadurch gekennzeichnet, daß die der als Schulter (52) dienenden Umrißlinie gegenüberliegende Seite des Langlochs (54) mit einem Ausschnitt (75) versehen ist.

4. Verbinder (20) nach Anspruch 1, 2 oder 3, dessen Langloch (54) sich in Richtung der Längsverschiebung (Pfeil 73) der Platte (24) erstreckt und dessen Platte (24) beidendig des Langlochs (59) Steuervorsprünge (55, 56) besitzt, welche eine auf der Außenseite (62) der Platte (24) anliegende Exzenterscheibe (63) des Exzenterbolzens (25) zwischen sich fassen,
dadurch gekennzeichnet,
daß wenigstens einer der Steuervorsprünge aus einer aus der Plattenebene ausgeformten Sicke (55) besteht.

5. Verbinder (20) nach Anspruch 4, dadurch gekennzeichnet, daß die Sicke (55) länglich ausgebildet ist und sich in Längsverschiebungsrichtung (Pfeil 73) der Platte (24) erstreckt.

6. Verbinder (20) nach einem oder mehreren der Ansprüche 1 bis 5, dessen Platte aus einem Stahlblechstreifen (24) besteht und eine einstückig mit dem Stahlblechstreifen (24) ausgebildete Federzunge (53) trägt, welche mit ihrem freien Zungenende an einer inneren Führungsfläche (43) im Hohlprofil (12) bzw.

Lagergehäuse (23) längsverschieblich abgestützt ist und eine quer zur Profilstange (10) auf die Platte (24) wirkende Federkraft (Pfeil 77) erzeugt, dadurch gekennzeichnet, daß neben der Führungsfläche (43) im Hohlprofil (12) bzw. Lagergehäuse (13) mindestens ein Stützbock (36) angeordnet ist, an welchem - wenigstens in voller Einschublage (Fig. 4 bis 6) - die Platte (24) mit ihrem Nachbarbereich (57) zur Federzunge (53) anliegt.

**Claims**

1. A coupling member (20) for coupling profile bars (10, 11) of a framework, of which at least some profile bars have undercut longitudinal slots (14) and others have a hollow space (12) for front face acceptance of the coupling member (20), in which

the coupling member (20), either directly or indirectly via a bearing housing (23), has at least one profiled plate (24) guided for longitudinal movement (arrow 73) in the hollow profile section, fitted with a coupling hook (22) at its end,

the coupling hook (22) protrudes from the face end (13) of the profile bar (10) receiving the coupling member (20), in a coupling situation, is adapted to engage in a longitudinal slot (14) of the other profile bar (11) and clamped therein,

the plate (24) has passing therethrough an eccentric pin (25) rotatably supported in the hollow profile section (12), resp. the bearing housing (23), extending transversely to the profile bar (10),

which, for rotation (arrows 82; 83) is accessible through a cross hole (70) in the profile bar (10), and the eccentric pin (25), when rotated (arrows 82; 83), with its eccentric (63) moves the plate (24) in a longitudinal direction of the profile bar (10) between a release position (Figs. 1 to 3) and a clamping position (Figs. 4 to 6),

characterized in

that the eccentric pin (25) has a stop nose (79) located in a defined angular position with respect to the eccentric (63), and adapted to follow rotation,

and the plate (24) has a shoulder (52) in the plane of rotation of this stop nose (79),

against which the stop nose (79) comes to bear upon rotation (arrows 82; 83) of the eccentric pin (25) into the fully clamped and/or release position of the plate (24),

this impacting force (arrow 84) pressing (arrow 86) the narrow side (85) of the plate (24) against its longitudinal guide surface (87) in the hollow profile section (12) resp. bearing housing (23) and blocking further rotation (arrows 82; 83) of the eccentric pin (25).

2. A coupling member (20) as claimed in the claim 1 including an oblong hole (54) in the plate (24) for passage of the eccentric pin (25) therethrough,

characterized in

that the stop nose (79) is located in the oblong hole (54), and the one contour (52) of the oblong hole (54) forms the shoulder for rotational limitation (arrows 82; 83) of the eccentric pin (25).

3. A coupling member (20) as claimed in the claim 2,

characterized in

that the side of the oblong hole (54) opposite the contour serving as a shoulder (52) is provided with a recess (58).

4. A coupling member (20) as claimed in any one of the claims 1, 2 or 3 whose oblong hole (54) extends in the direction of longitudinal movement (arrow 73) of the plate (24), and whose plate (24) has control projections (55, 56) at both ends of the oblong hole (59), gripping between them an eccentric disk (63) of the eccentric pin (25), which bears against the outer surface side (62) of the plate (24),

characterized in

that at least one of the control projections consists of a bead (55) formed out of the plate plane.

5. A coupling member (20) as claimed in the claim 4,

characterized in

that the bead (55) is designed to be oblong and extends in the direction of longitudinal movement (arrow 73) of the plate (24).

6. A coupling member (20) as claimed in any one or several of the claims 1 to 5, whose plate consists of a sheet metal strip (24) and carrying a resilient tongue (53) designed to be inte-gral with the sheet metal strin (24), which is supported with its free tongue end at an inner guide surface (43) in the hollow profile section (12) resp. bearing housing (23) for longitudinal movement therein, and generates a spring force (arrow 77) acting on the plate (24) transversely to the profile bar (10),

characterized in

that adjacent the guide surface (43) there is provided in the hollow profile section (12) or bearing housing (23) at least one support block (36) against which the plate (24) bears with its section (57) neighboring the resilient tongue (53) - at least in the full clamping position (Figs. 4 to 6).

**Revendications**

1. Connecteur (20) permettant l'accouplement de barres profilées (10, 11) d'un échafaudage dont au moins certaines présentent des gorges longitudinales (14) à parties rentrantes et d'autres, une cavité profilée (12) destinée à recevoir, par son côté frontal, ce connecteur (20), connecteur dans lequel,

celui-ci comporte au moins une plaque profilée (24) présentant, à son extrémité, un crochet d'accouplement (22) et guidée en déplacement longitudinal (flèche 73) dans le profilé creux, directement ou indirectement par l'intermédiaire d'un boîtier-palier (23),

le crochet d'accouplement (22) fait saillie par rapport à l'extrémité frontale (13) de la barre profilée (10) dans laquelle est logé le connecteur (20) et, en cas d'accouplement peut s'emboîter dans une gorge longitudinale (14) de l'autre barre profilée (11) et y être immobilisé par serrage,

la plaque (24) est traversée par un axe à excentrique (25) qui s'etend transversalement à la barre profilée (10) et est monté à rotation dans la cavité profilée (12) ou le boîtier-palier (23) et qui, pour le faire tourner (flèches 82, 83), est accessible par un perçge transversal (70) ménagé dans la barre profilée (10),

et, lorsqu'on le fait tourner (flèches 82, 83) avec son excentrique (63), l'axe à excentrique (25) déplace la plaque (24) dans la direction longitudinale de la barre profilée (10) entre une position déployée (Fig, 1 à 3) et une position rentrée (Fig. 4 à 6),

caractérisé en ce que l'axe à excentrique (25) comporte un nez de butée (79) pouvant tourner avec lui et disposé suivant une position angulaire déterminée par rapport à l'excentrique (63)

et en ce que la plaque (24) comporte, dans le plan de rotation de ce nez de buté (79), un épaulement (52) sur lequel, lors de la rotation (flèches 82, 83) de l'axe à excentrique (25), le nez de butée (79) vient s'appliquer pour la position totalement rentrée et/ou la position totalement déployée de la plaque (24),

cet effort d'application (flèche 84) appuyant (flèche 86) la tranche (85) de la plaque (24) contre sa surface de guidage longitudinale (87) ménagée dans la cavité profilée (12) ou le boîtier-palier (23) et s'opposant à la poursuite de la rotation (flèches 82, 83) de l'axe à excentrique (25),

2. Connecteur (20) selon la revendication 1, présentant dans la plaque (24) un trou allongé (54) destiné à être traversé par l'axe à excentrique (25), caractérisé en ce que le nez de butée (79) est situé dans le trou allongé (54) et en ce que l'une des lignée (52) du contour intérieur de ce trou allongé (54) constitue l'épaulement servant à limiter la rotation (flèches 82, 83) de l'axe à excentrique (25).

3. Connecteur (20) selon la revendication 2, caractérisé en ce que le côté du trou allongé (54), qui est situé à l'opposé de la ligne du contour intérieur servant d'épaulement (52), est muni d'un évidement (75).

4. Connecteur (20) selon la revendication 1, 2 ou 3, dont le trou allongé (54) s'étend suivant la direction du déplacement longitudinal (flèche 73) de la plaque (24) et dont la plaque (24) comporte, aux deux extrémités du trou allongé (54), des saillies de manoeuvre (55, 56) qui saisissent entre elles un disque excentré (63) de l'axe à excentrique (25), ce disque s'appuyant sur la face extérieure (62) de la plaque (24), caractérisé en ce qu'au moins l'une des saillies de manoeuvre est constituée par une nervure (55) repoussée hors du plan de la plaque.

5. Connecteur (20) selon la revendication 4, caractérisé en ce que la nervure (55) est disposée longitudinalement et s'étend suivant la direction du déplacement longitudinal (flèche 73) de la plaque (24).

6. Connecteur (20) selon l'une ou plusieurs des revendications 1 à 5, dont la plaque est constituée par une lame de tôle d'acier (24) et porte une languette élastique (53) qui est réalisée en une seul pièce avec cette lame de tôle d'acier (24) et qui s'appuie de façon mobile longitudinalement, par son extrémité libre, sur une surface intérieure de guidage (43) ménagée dans la cavité profilé (12) ou le boîtier-palier (23), cette languette fournissant un effort élastique (flèche 77) agissant sur la plaque (24) transversalement à la barre profilée (10), caractérisé en ce que, outre la surface de guidage (43), il est prévu dans la cavité profilée (12) ou le boîtier-palier (13) au moins une patte d'appui (36) sur laquelle - au moins dans la position totalement rentrée (Fig. 4 à 6) - la plaque (24) s'appuie par sa zone (57) voisine de la languette élastique (53),

11
14
49
13
53
20
82
25
12
10
II
II
22
21
24
19
72
76
FIG.1

11
14
22
21
13
36
53
43
31
33
68
25
32
31
71
10
III
III
76
20
16
15
65
46
24
61
55
26
63
30
77
66
70
20
55
25
52
80
79
30
33
24
63
82
54
83
81
10
FIG.2

FIG.3

11
25
83
10
V
V
24
72
30
19
FIG.4
11
17
14
22
18
13
53
25
61
73
10
VI
VI
74
17
46
41
65
FIG.5
67
20
87
52
88
23
86
85
81
24
84
79
80
12
FIG.6
83
63
54
58
10

24
40
20
61
31
23
25
13
10
12
38
78
26
30
67
69

FIG.7

FIG.8

FIG.9

FIG.10

FIG.11

FIG.12
22
24
53
61
65
60
57
55
62
56
FIG.13
22
24
54
52
56
53
60
59
55
58
57

49
26
23
36
38
27
28
76
21
51
31
47
35
FIG.14
21
48
43
36
42
29
32
28
76
21
46
48
41
23
36
31
32
35
50
FIG.15
47
45
44
43
42
26
39